# EUROPÄISCHE PATENTSCHRIFT

(11) **EP 2 921 050 B1**
(45) Veröffentlichungstag und Bekanntmachung des Hinweises auf die Patenterteilung: **09.12.2020**
(21) Anmeldenummer: 15401018.5
(22) Anmeldetag: 17.03.2015
(51) Int. Cl.: A01M 7/00

(54) **VERFAHREN ZUM AUSBRINGEN VON PFLANZENSCHUTZMITTELN**
METHOD FOR DISTRIBUTING PLANT-PROTECTING AGENTS
PROCÉDÉ D'ÉPANDAGE DE PRODUITS PHYTOSANITAIRES

(30) Priorität: 20.03.2014 DE 102014103787
(43) Veröffentlichungstag der Anmeldung: 23.09.2015
(73) Patentinhaber: Amazonen-Werke H. Dreyer GmbH & Co. KG, 49205 Hasbergen (DE)
(72) Erfinder: Resch, Rainer, 49170 Hagen a TW (DE); Fröschle, Heike, 49124 Georgsmarienhütte (DE)

(56) Entgegenhaltungen:
- EP-A2- 2 567 617
- WO-A1-2012/032245
- DE-A1- 4 441 472
- DE-A1-102006 012 504
- US-A1- 2012 168 528

## Beschreibung

Die vorliegende Erfindung betrifft ein Verfahren zum Ausbringen von Pflanzenschutzmittel gemäß dem Oberbegriff des Patentanspruchs 1.

Mit GPS-unterstützten Spurführungssystemen können Landwirte bereits heute ihre Schlepper zentimetergenau in der Spur halten, um granulierte Betriebsmittel, wie Dünger oder Saatgut, als auch flüssige Betriebsmittel, wie Gülle oder Pflanzenschutzmittel, nach einer Applikationskarte exakt auf dem landwirtschaftlichen Feld auszubringen. Zudem werden Überlappungen beim Überfahren der Felder vermieden, wodurch weniger Betriebsmittel und Energie verbraucht werden und somit weniger Umweltbelastungen entstehen.

Mittlerweile werden auch die modernen Pflanzenschutzmittel-Spritzeinrichtungen mit GPS-Technik entwickelt. Bei solchen Spritzeinrichtungen ist üblicherweise auf einem an einem Fahrzeug, insbesondere einer landwirtschaftlichen Zugmaschine wie einem Traktor, anhängbaren Fahrgestell ein Behälter zur Aufnahme eines flüssigen Pflanzenschutzmittels angeordnet, welches von seitlich von dem Fahrgestell abragenden Spritzbalken der Spritzeinrichtung ausgesprüht wird. Die GPS-Technik ermöglicht es dabei diesen Spritzeinrichtungen, die ausgebrachte Menge des Pflanzenschutzmittels auf jeder Teilfläche des landwirtschaftlichen Feldes bedarfsgerecht zu gestalten.

Beispielsweise kann durch eine GPS-gesteuerte Teilbreitenschaltung (mittels An- / Abschaltung einzelner Spritzdüsen) erreicht werden, dass lediglich einzelne Teilflächen des landwirtschaftlichen Feldes mit einer vorgegebenen Pflanzenschutzmittelmenge bespritzt werden. Diesen vorteilhaften technischen Effekt macht man sich insbesondere dann zu Nutze, wenn das zu behandelnde landwirtschaftliche Feld ungleichförmig (z. B. keilförmig) angelegt wurde, was in der modernen Landwirtschaft keine Seltenheit darstellt.

Zudem erlaubt es die GPS-Technik dem modernen Landwirt, bereits am Vortag vom heimischen Computer aus Applikationskarten zu erstellen, mit denen am nächsten Tag gearbeitet werden soll. Softwareprogramme helfen dabei, die richtige Menge Pflanzenschutzmittel zu erfassen und die Wege so zu gestalten, dass mit möglichst wenig Zeit- und Ressourcenaufwand gearbeitet werden kann. Die erstellten Applikationskarten können dann über eine entsprechende Schnittstelle, z. B. online, per USB- oder Bluetooth-Anbindung, innerhalb weniger Sekunden auf eine vorzugsweise als Bordcomputer ausgebildete zentrale Rechnereinheit (die direkt an der Spritzeinrichtung oder am Fahrzeug angebracht ist) hochgeladen werden, sodass anschließend in Abhängigkeit vom GPSerfassten und ebenfalls an den Bordcomputer übermittelten Standort die Ausbringmenge an Pflanzenschutzmittel wie vorgeschrieben angesteuert bzw. geregelt werden kann.

Um Gewässer einschließlich der darin lebenden Organismen vor Pflanzenschutzmitteleinträgen und damit verbundenen möglichen negativen Einflüssen zu schützen, ist der überwiegende Teil zugelassener Pflanzenschutzmittel mit entsprechenden gesetzlichen Abstandsauflagen versehen, die in der Regel bußgeldbewehrt sind. Grundsätzlich regelt auch das neue Pflanzenschutzgesetz (§ 12 Abs. 2 PflSchG), das Pflanzenschutzmittel nicht in oder unmittelbar an oberirdischen Gewässern und Küstengewässern angewendet werden dürfen.

Zur Einhaltung der gesetzlich vorgegebenen Mindestabstände zu Oberflächengewässern (wie Bachläufe, Entwässerungsgräben, Vorfluter u. Ä.) war der Landwirt bisher auf Erfahrung und Augenschein angewiesen, um bis zu dem jeweiligen Gewässer-Mindestabstand ein gleichmäßiges Ausbringen des Pflanzenschutzmittels erreichen zu können. Augenschein und Erfahrungswerte sind jedoch nicht dazu geeignet, um eine exakte und zuverlässige Einhaltung der gesetzlich geforderten Abstände gewährleisten zu können.

Demzufolge tritt im Grenzbereich zwischen landwirtschaftlichem Feld und Oberflächengewässer regelmäßig die Problematik auf, dass der "ungespritzte", nicht mit Pflanzenschutzmittel behandelte Randstreifen des Feldes, den gesetzlich vorgegebenen Mindestabstand unterschreitet oder überschreitet. Eine Unterschreitung hat eine Gefährdung oder gar Schädigung des Gewässers und für den Landwirt gegebenenfalls eine empfindliche Geldbuße zur Folge, während eine Überschreitung zu einem hohen Ernteverlust als Folge des Befalls der unnötigerweise unbehandelt gebliebenen Feldrandfläche durch Schadorganismen führen kann.

Die US 2012/ 0168528 A1 und die DE 10 2006 012 504 A1 beschäftigen sich mit dem Ausbringen von Pflanzenschutzmitteln in der Nähe von Gewässern und der abstandsabhängigen Applikation der auszubringenden Mittel.

Es ist daher die Aufgabe der vorliegenden Erfindung, ein Verfahren zum Ausbringen von Pflanzenschutzmittel auf ein landwirtschaftliches Feld bereitzustellen, mit welchem die gesetzlichen Abstandsauflagen zum Schutz von Gewässern zuverlässig eingehalten werden können, ohne dass dadurch unnötige Ernteverluste erzeugt werden.

Zur Lösung dieser Aufgabe wird ein Verfahren zum Ausbringen von Pflanzenschutzmittel auf ein landwirtschaftliches Feld mit einer einem Fahrzeug zugeordneten Spritzeinrichtung bereitgestellt, wobei während dem Ausbringen von Pflanzenschutzmittel Orts- bzw. Positionsdaten des Fahrzeugs insbesondere mittels eines Satellitennavigationssystems erfasst und an eine vorzugsweise als Bordcomputer ausgebildete Rechnereinheit übermittelt werden. Weiter sind Orts- bzw. Positionsdaten zumindest eines Gewässers in der Rechnereinheit hinterlegt und bei Erreichen und Unterschreiten eines vorgegebenen Abstandes zum Gewässer wird die Betriebsweise der Spritzeinrichtung von der Rechnereinheit derart gesteuert bzw. geregelt wird, dass eine Anpassung und / oder Reduzierung und / oder Beendigung des Ausbringens von Pflanzenschutzmittel durchgeführt wird, um das Gewässer (3a, 3b) nicht mit Pflanzenschutzmittel zu belasten. Zudem ist in der Rechnereinheit eine Applikationskarte vorgegeben, in welcher das zu behandelnde landwirtschaftliche Feld und die ausgebrachten und auszubringenden Pflanzenschutzmittelmengen abgespeichert sind. Darüberhinaus umfasst das Verfahren die folgenden fünf Schritte: In einem ersten Schritt wird der vorgegebenen Abstand zum jeweiligen Gewässer in die Rechnereinheit eingegeben. In einem zweiten Schritt wird auf der Applikationskarte das Gewässer mittels eines Markierungspolygons approximiert. In einem dritten Schritt wird das Markierungspolygon um den vorgegebenen Abstand zum Gewässer erweitert zur Bildung eines erweiterten Polygons. In einem vierten Schritt wird eine Überschneidungslinie ermittelt, wo sich das erweiterte Polygon mit dem zu behandelnden landwirtschaftlichen Feld überschneidet. In einem fünften Schritt wird, sobald das Fahrzeug die Überschneidungslinie erreicht und überquert, die Spritzeinrichtung von der Rechnereinheit automatisch derart gesteuert bzw. geregelt, dass eine Anpassung und / oder Reduzierung des Ausbringens des Pflanzenschutzmittels erreicht wird.

Die Entscheidung zur Anpassung und / oder Reduzierung und / oder Beendigung des Pflanzenschutzmittelaustrags in Gewässernähe wird somit nicht mehr dem Augenmaß des Landwirts überlassen, sondern wird automatisch mittels einer Rechnereinheit vorgenommen. Um den für das jeweilige Pflanzenschutzmittel gesetzlich vorgegebenen Abstand zum Gewässer exakt einhalten zu können, muss zum einen die Position des Fahrzeugs während der gesamten Applikationsfahrt bekannt sein. Hierbei ist es bevorzugt, dass die momentanen Positionsdaten des Fahrzeugs permanent mittels eines Satellitennavigationssystems, beispielsweise eines GPS (Global Positioning System), bestimmt und an den Bordcomputer gesendet werden.

Die Zuordnung der Spritzeinrichtung zum Fahrzeug kann dadurch erfolgen, dass die Spritzeinrichtung an einem selbstfahrenden oder als Anhänger ausgebildeten Fahrzeug angebracht ist oder dass die Spitzeinrichtung in Form einer an ein Fahrzeug angebauten (wahlweise auch mit Erweiterungen, wie beispielsweise einem zusätzlichen Fronttank versehenen) Spritzeinrichtung ausgebildet ist.

Zum anderen müssen die Positionsdaten des oder der an das landwirtschaftliche Feld angrenzenden Gewässer in der Rechnereinheit hinterlegt sein. Aus der aktuellen Position des Fahrzeugs und aus der hinterlegten Position des Gewässers kann somit punktgenau ermittelt werden, wann die am Fahrzeug angebrachte Spritzeinrichtung den gesetzlich vorgegebenen Mindestabstand zum Gewässer erreicht.

Zum Schutz der Gewässer hat die Biologische Bundesanstalt bei der Zulassung von Pflanzenschutzmitteln mittelspezifisch Abstandsauflagen erlassen, die den Eintrag in das Oberflächengewässer bei Abschwemmungs- aber auch bei Abdrift- und Auswaschungsprozessen vermeiden sollen (sogenannte NW-Auflagen = Naturhaushalt Wasserorganismen) und die aktuell zwischen 5 m und 20 m variieren.

Bei einem detektierten Erreichen und Unterschreiten des gesetzlich vorgegebenen (z. B. in den NW-Auflagen festgelegten) Mindestabstandes zum Gewässer schaltet die zentrale Rechnereinheit die Spritzeinrichtung automatisch auf eine Betriebsweise um, die zur Einhaltung des Gewässerschutzes ein angepasstes und / oder reduziertes Ausbringen des Pflanzenschutzmittels gewährleistet. Gegenüber einem manuellen, allein auf Sicht kontrollierten Umschalten durch den Maschinenbediener bietet das automatische Umschalten durch die Rechnereinheit den Vorteil, dass das Pflanzenschutzmittel exakt bis an den gesetzlich vorgegebenen Abstand zum Gewässer appliziert werden kann, ohne dass dieser Abstand überschritten oder unterschritten wird, wodurch eine effiziente, aber zugleich umweltschonende Ausbringung des Pflanzenschutzmittels an Feldrandgrenzen ermöglicht wird.

Eine Ausgestaltung des Verfahrens sieht vor, dass die Spritzeinrichtung in Form zumindest einer Spritzbalkenanordnung mit zumindest einer quer zur Fahrtrichtung verlaufenden Flüssigkeitsleitung ausgebildet ist, wobei die Spritzbalkenanordnung in Abständen mit Düsenstöcken aus jeweils mehreren verschiedenartigen Spritzdüsen versehen ist, denen über die Flüssigkeitsleitung ein flüssiges Pflanzenschutzmittel unter Druck zugeführt wird, und wobei ein oder mehrere Düsenstöcke jeweils einer Teilbreite zugeordnet sind.

Derartige Spritzeinrichtungen können als selbstfahrende, gezogene oder angebaute Feldspritzen von einem Ackerschlepper (Traktor) über das zu behandelnde Feld gezogen werden. Diese Feldspritzen sind jeweils mit einem Vorratsbehälter ausgestattet, in dem das Spritzmittel (flüssiges Pflanzenschutzmittel) enthalten ist. Über eine Förderpumpe wird das Spritzmittel unter Druck den aus jeweils mehreren Spritzdüsen bestehenden Düsenstöcken zugeleitet. Das quer zur Fahrtrichtung verlaufende Spritzgestänge ist in mehrere Teilbreiten unterteilt, denen jeweils ein oder mehrere Düsenstöcke zugeordnet ist. Zur Gewährleistung einer gleichmäßigen Pflanzenschutzmittelverteilung (ohne Doppelbehandlungen oder Fehlstellen) können Teilbreiten (Düsenstöcke) der Feldspritze automatisch oder manuell ein- bzw. abgeschaltet werden, sodass nicht immer mit voller Arbeitsbreite gearbeitet werden muss.

In einer weiteren bevorzugten Ausgestaltung sind die Art und / oder die Parameter der jeweils in den Düsenstöcken vorhandenen Spritzdüsen in der Rechnereinheit hinterlegt und bei Erreichen und Unterschreiten des vorgegebenen Abstandes zum Gewässer wird in zumindest einem Düsenstock auf eine Spritzdüse umgeschaltet, die ein in Spritzmenge und / oder im Spritzbild angepasstes Ausbringen des Pflanzenschutzmittels gewährleistet, um das Gewässer nicht mit Pflanzenschutzmittel zu belasten.

Wenn der für das jeweilige Pflanzenschutzmittel festgelegte Mindestabstand zum Gewässer erreicht oder unterschritten ist, wird in den Düsenstöcken jeweils auf eine spezielle Randdüse umgeschaltet, die aufgrund ihrer Spritzmenge und ihres Spritzbildes dazu geeignet ist, den neben dem Gewässer liegenden Feldrandbereich mit Pflanzenschutzmittel zu bespritzen, ohne dass dabei ein schädlicher Eintrag in das Gewässer erfolgt. Verlässt das Fahrzeug mit der Spritzeinrichtung den Feldrandbereich wieder, d. h. ist der Abstand zwischen Fahrzeug und Gewässer größer als der für das jeweilige Pflanzenschutzmittel geforderte Mindestabstand zum Gewässer, dann kann von der Randdüse zurück auf eine für die Bespritzung des landwirtschaftlichen Feldes optimale Düse geschaltet werden. Die Verwendung von Düsenstöcken, die jeweils aus mehreren über- oder nebeneinanderliegenden Einzeldüsen aufgebaut sind, stellt die Einhaltung von Abstandsvorgaben sicher, indem je nach Position des Fahrzeugs automatisch auf die jeweils optimale Düse (z. B. auf eine dem Feldrand zugeordnete Randdüse) umgeschaltet wird. Durch diese automatische Düsenumschaltung wird dem Landwirt die Pflanzenschutzmittelapplikation deutlich erleichtet, da ein aufwendiger manueller Düsenwechsel (mit Zwischenstopps) entfällt. Durch die Umschaltung auf die Randdüsen bei Erreichen / Unterschreiten des geforderten Mindestabstandes zum Gewässer muss zudem keine komplette Abschaltung von Teilbreiten durchgeführt werden, die zu Fehlstellen in der Pflanzenschutzmittelapplikation und somit zu Ertragsminderungen führen können.

Nach einer besonders bevorzugten Ausführungsform des erfindungsgemäßen Verfahrens wird bei Erreichen und Unterschreiten des vorgegebenen Abstandes zum Gewässer in zumindest einem Düsenstock auf eine Randdüse umgeschaltet.

Zur Einhaltung der Abstandsauflagen kann bei Erreichen und Unterschreiten des vorgegebenen Abstandes zum Gewässer in einem oder mehreren Düsenstöcken von einer regulären Düse auf eine gesonderte Randdüse umgeschaltet werden. Randdüsen, die heute von den meisten Düsenherstellern angeboten werden, sind zumeist als exzentrisch arbeitende Flachstrahldüsen ausgebildet, d. h., der Spritzfächer dieser Flachstrahldüsen ist nach einer Seite deutlich verkleinert. Im Gegensatz zu einer regulären Düse mit symmetrischem Spritzwinkel weist die Randdüse somit einen asymmetrischen Spritzwinkel auf. Zum Feldinneren hin wird das Spritzbild durch die Randdüse weiterhin regulär ergänzt. Zum Feldrand hingegen ist der Spritzwinkel deutlich verkleinert. Hierdurch wird das Spritzbild auf dieser Seite begrenzt und praktisch randscharf abgeschnitten. Somit erlaubt der asymmetrische Spritzwinkel der Randdüse eine randscharfe Behandlung der gesetzlich vorgegebenen Abstandsgrenze. Der Spritzbereich, d. h. die Spritzbreite und somit der Austrag über die gesetzlich vorgegebene Abstandsgrenze werden auf diese Weise deutlich reduziert.

Nach einer weiteren Ausführungsform des erfindungsgemäßen Verfahrens werden bei Erreichen und Unterschreiten des vorgegebenen Abstandes zum Gewässer ein oder mehrere Düsenstöcke abgeschaltet, um einzelne Teilbreiten zu schließen oder das Ausbringen von Pflanzenschutzmittel ganz einzustellen.

Da Gewässer zumeist unregelmäßig geformt sind, lässt sich durch eine flexible Abschaltung von Teilbreiten der Spritzeinrichtung gewährleisten, dass kein Pflanzenschutzmittel innerhalb des gesetzlich geschützten Mindestabstandes zum Gewässer ausgebracht wird. Dabei werden lediglich die Teilbreiten der Spritzeinrichtung abgeschaltet, die entweder ganz innerhalb des geforderten Mindestabstandes zum Gewässer liegen oder teilweise in diesen Mindestabstand hineinragen, sodass eine Verletzung der Abstandsauflagen sicher ausgeschlossen werden kann. Befindet sich die gesamte Spritzeinrichtung (über ihre gesamte Arbeitsbreite) innerhalb des geforderten Mindestabstandes zum Gewässer, müssen alle Teilbreiten geschlossen werden, um zu gewährleisten, dass keine Pflanzenschutzmittel in diesen geschützten Gewässerrandstreifen eingetragen werden. Beim Erreichen / Unterschreiten des Mindestabstandes zum Gewässer erkennt die Rechnereinheit mit Hilfe der aktuellen GPS-Koordinaten diejenigen Teilbreiten, welche den Mindestabstand von der Gewässergrenze nicht einhalten und schaltet diese automatisch ab. Erreicht das Fahrzeug eine Position, bei der sich die vormals abgeschaltete Teilbreite wieder vollständig außerhalb des geschützten Mindestabstandes zum Gewässer befindet, dann wird diese Teilbreite wieder geöffnet, bis schließlich eine Fahrzeugposition erreicht ist, bei der die gesamte Arbeitsbreite der Spritzeinrichtung wieder zur Verfügung steht.

Die vom Landwirt am Hof-Computer vorbereitete Applikationskarte wird auf das Prozesssteuerungssystem der mobilen, vorzugsweise als Bordcomputer ausgebildeten Rechnereinheit übertragen und kann dort zur Ausführung kommen. Die teilflächenspezifische Pflanzenschutzmittelausbringung erfolgt dabei automatisch, indem an jedem Punkt innerhalb des Feldes die Information der Applikationskarte umgesetzt wird. Die zentrale Rechnereinheit (Bordcomputer) umfasst hierzu ein software-gestütztes und datenbasierendes Entscheidungstool, mit dem die Entscheidung getroffen wird, ob gespritzt werden soll und, falls ja, welches Pflanzenschutzmittel wie (d. h. mit welcher Düse) gespritzt werden soll. Diese Entscheidung wird vom Entscheidungstool anhand der an der jeweiligen Position in der Applikationskarte gespeicherten Informationen getroffen und in Abhängigkeit von der getroffenen Entscheidung werden dann über eine Elektronik die einzelnen Ventile, die die Spritzdüsen steuern, geöffnet bzw. geschlossen. Unabdingbar ist jedoch die Verfügbarkeit eines Ortungssystems, z. B. eines satellitengestützten Global Positioning Systems (GPS), um die jeweilige Teilfläche lokalisieren und die vorab berechnete Pflanzenschutzmittelmenge dort ausbringen zu können.

Die Anpassung und / oder Reduzierung der Pflanzenschutzmittelausbringung kann beispielsweise durch eine Abschaltung von Teilbreiten oder durch einen Düsenwechsel (z. B. auf eine abdriftmindernde Düse) erfolgen. Hierdurch wird die Einhaltung der Abstandsvorgaben für den Gewässerschutz (wie beispielsweise in den sogenannten NW-Auflagen festgesetzt) gewährleistet. Das Abschalten von Teilbreiten bzw. das Umschalten auf die jeweils optimale Düse erfolgt in hochpräziser Weise, indem in der Rechnereinheit hinterlegte Applikationskarten genutzt werden und indem auf eine softwareseitig unterstützte Einzeldüsenschaltung zurückgegriffen wird, mit der es möglich ist, einzelne oder mehrere Düsen über eine intelligente Elektronik zu aktivieren / deaktivieren. Dank des optimalen Rechenalgorithmus, der die Lage des Gewässers, den hierzu vorgegebenen Abstand und dessen Überschneidung mit dem Feld berücksichtigt, wird eine präzise Applikation des Pflanzenschutzmittels durch die Spritzeinrichtung ermöglicht, ohne dass es zu Ertragseinbußen oder Umweltbelastungen kommt.

Insbesondere kann es sich bei dem Gewässer um ein stehendes oder nahezu stehendes Gewässer handeln, wie einen See oder einen Teich, der durch ein Flächenpolygon als Markierungspolygon approximiert wird, oder aber es kann sich bei dem Gewässer um ein fließendes Gewässer, wie einen Fluss oder einen Bach, handeln, der durch ein Linienpolygon als Markierungspolygon approximiert wird.

Das Gewässer wird durch den Anwender auf der Karte mittels eines Polygons markiert. Dies kann je nach Art und Größe des Gewässers durch ein Flächen- oder Linienpolygon vorgenommen werden. Durch Erweiterung dieses Markierungspolygons um den Parameter der gesetzlichen Abstandsvorgabe von der Polygonumrandung (Außengrenze der Gewässerfläche) ausgehend kann der Pufferstreifen, auf welchem kein Pflanzenschutzmittel eingesetzt werden darf, in der Applikationskarte exakt bestimmt werden. Danach erfolgt die Berechnung der Schnittpunkte der um die Abstandsvorgabe erweiterten Polygonfläche bzw. -linie mit den Außenkanten des zu behandelnden landwirtschaftlichen Feldes. Die sich zwischen diesen Schnittpunkten innerhalb des Feldes erstreckende Überschneidungslinie des erweiterten Polygons bildet eine Führungslinie, bei deren Erreichen die Anpassung / Reduzierung der Pflanzenschutzmittelausbringung (z. B. durch Teilbreitenabschaltung oder durch Umschaltung auf spezielle Randdüsen) erfolgt.

Die Erfindung sieht in einer vorteilhaften Ausgestaltungsform vor, dass Profildaten des zu behandelnden Feldes, wie die Hangneigung, und / oder meteorologische Daten, wie die Windrichtung und / oder die Windstärke, in der Rechnereinheit hinterlegt sind, um ein daran angepasstes Ausbringen von Pflanzenschutzmittel zu erreichen.

Die Verteilung des Pflanzenschutzmittels hängt nicht nur von den Betriebsparametern der Spritzeinrichtung, sondern auch von äußeren Randbedingungen während der Pflanzenschutzmittelausbringung, wie z. B. vom Profil des zu behandelnden Feldes oder von den aktuellen meteorologischen Bedingungen, ab. Demzufolge ist es sinnvoll, auch diese äußeren Randbedingungen permanent zu erfassen und an die zentrale Rechnereinheit weiterzuleiten, um das Ausbringen des Pflanzenschutzmittels unter Berücksichtigung dieser äußeren Randbedingungen zusätzlich zu optimieren. Insbesondere ist es für die Bewertung der Abschwemmungsgefahr wichtig, die Hangneigung (z. B. durch Ablesen aus einer abgespeicherten Tabelle oder durch in-situ-Messung mit einem Gefällemesser) zu kennen, um die Ausbringung des Pflanzenschutzmittels (z. B. Spritzmenge und / oder Spritzbild) darauf abstimmen zu können. Zudem ist das Pflanzenschutzmittel bei seiner Ausbringung einer Abdrift ausgesetzt, die sich beispielsweise aufgrund herrschender meteorologischer Bedingungen, wie Temperatur, Windstärke, -richtung und Turbulenzen, ergibt. Um das Abdriftverhalten im Voraus zu ermitteln und daraufhin die Spritzparameter zur Abdriftminimierung anpassen zu können, ist es vorteilhaft auch diese meteorologischen Daten permanent (z. B. durch manuelles Eingeben in die Rechnereinheit oder durch in-situ-Messung) zu überwachen.

Nach einer weiteren bevorzugten Ausführungsform ist der Spritzeinrichtung zumindest eine Sensoreinrichtung zur Ermittlung des Taubedeckungsgrades der mit dem Pflanzenschutzmittel zu behandelnden Pflanzen zugeordnet, wobei die Rechnereinheit die Spritzmenge und / oder das Spritzbild des Pflanzenschutzmittels in Abhängigkeit des Taubedeckungsgrades einstellt und / oder verändert.

Als Zusatzoption kann die Spritzeinrichtung mit einem Tausensor ausgerüstet sein, der den ermittelten Taubedeckungsgrad an die zentrale Rechnereinheit überträgt. Somit wird der Taubedeckungsgrad als zusätzliche Entscheidungsinformation dem Entscheidungstool der Rechnereinheit zugeführt, um zu entscheiden, ob die jeweilige Spritzdüse an- bzw. ausgeschaltet oder gewechselt werden soll. Hierzu kann der Nutzer im Voraus in ein auf der zentralen Rechnereinheit installiertes Programm eingeben oder wahlweise aus einer Datenbank, einer Beratungseinheit oder einem Managementsystem die Information beziehen, welche Düse bei welchem Taubedeckungsgrad zu verwenden ist. Das Programm fragt fortlaufend den momentan auf dem Feld vorhandenen Taubedeckungsgrad vom Tausensor ab und gleicht diesen Taubedeckungsgrad mit den im Programm hinterlegten Düsen ab. In Abhängigkeit dieses Abgleichs wird die entsprechend ideale / gewünschte Düse zur Applikation des Pflanzenschutzmittels ausgewählt und eingestellt.

Weitere Vorteile und vorteilhafte Ausgestaltungen des erfindungsgemäßen Verfahrens ergeben sich aus der folgenden Zeichnungsbeschreibung. Die Zeichnungen zeigen in
- Fig. 1: ein Blockdiagramm eines Systems zur Durchführung einer Ausführungsform des erfindungsgemäßen Verfahrens;
- Fig. 2 und 3: schematische Darstellungen, welche die in einer Ausführungsform des erfindungsgemäßen Verfahrens durchgeführten Schritte zur Grenzlinienbestimmung verdeutlichen;
- Fig. 4 und 5: schematische Darstellungen, welche die in einer weiteren Ausführungsform des erfindungsgemäßen Verfahrens durchgeführten Schritte zur Grenzlinienbestimmung verdeutlichen.

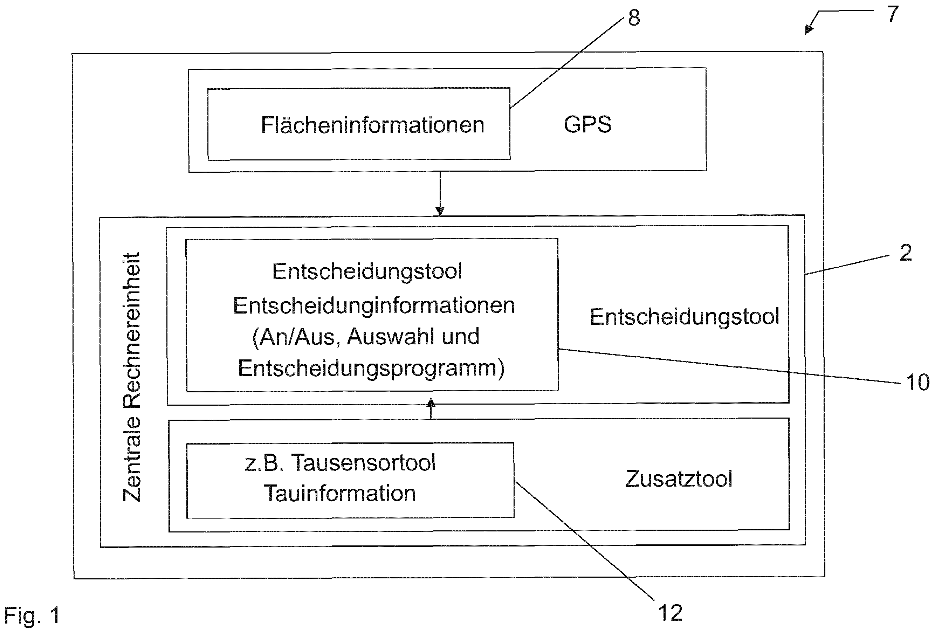

Fig. 1 zeigt in schematischer Weise ein System 7, mit dem die bei der Ausbringung von Pflanzenschutzmitteln geforderten Abstandsvorgaben zu Oberflächengewässern präzise eingehalten werden können.

Hierzu muss zunächst eine gewässerseitige "Grenzlinie" festgelegt werden, bis zu welcher das jeweilige Pflanzenschutzmittel ungestört auf das landwirtschaftliche Feld 1 ausgebracht werden darf, ohne dass ein Eintrag in das jeweilige Gewässer 3a, 3b erfolgt. Bei dem in Fig. 1 dargestellten System 7 werden zur Festlegung der "Grenzlinie" durch GPS gewonnene Flächeninformationen 8 in eine zentrale Rechnereinheit 2 eingelesen.

Stattdessen ist es jedoch auch möglich, die "Grenzlinie" für die Pflanzenschutzmittelapplikation nicht "online" auf dem Feld 1 per GPS, sondern "offline" (d. h. vor Beginn der Applikation) in einer Applikationskarte 9 oder in einer Karte anderer Art festzulegen. In jedem Fall müssen aber die aktuellen Orts- bzw. Positionsdaten des zur Ausbringung des Pflanzenschutzmittels dienenden Fahrzeugs mittels GPS oder eines anderen Lokalisierungssystems permanent erfasst und ausgewertet werden, um zu bestimmen, ob das Fahrzeug die festgelegte "Grenzlinie" erreicht bzw. überquert hat. Ist dies der Fall, wird von einem in der zentralen Rechnereinheit 2 integrierten Entscheidungstool 10 die Entscheidung getroffen, einzelne Düsenstöcke der Spritzeinrichtung ganz an- oder abzuschalten bzw. in einzelnen Düsenstöcken auf abdriftmindernde Düsen umzuschalten. Diese An-, Ab- oder Umschaltung wird automatisch durch die Rechnereinheit 2 und die daran angeschlossene Düsenschaltung vorgenommen, wobei nicht nur die Entscheidung, wann, sondern auch die Entscheidung, wo und in welchem Düsenstock an-, ab- oder umgeschaltet wird, automatisch durch das in der Rechnereinheit 2 vorgesehene Entscheidungsprogramm erfolgt.

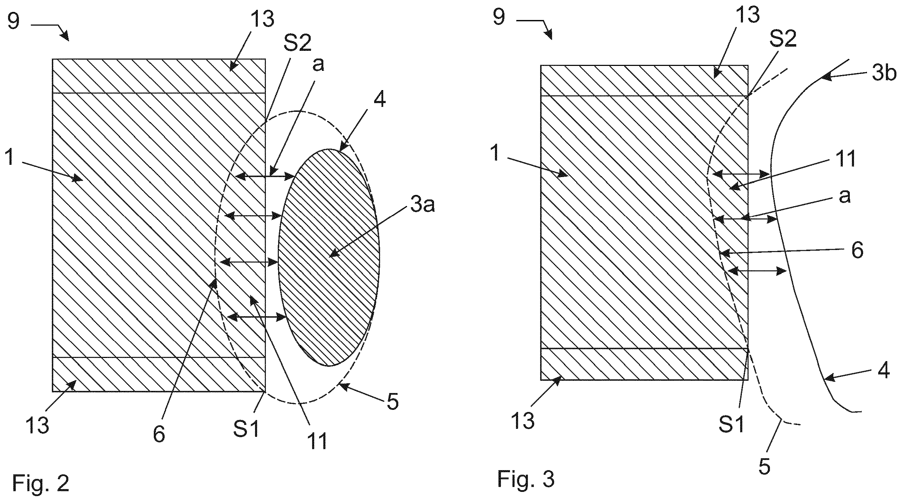

In den Fig. 2 und 3 ist gezeigt, wie die "Grenzlinie" zur Ab- / Umschaltung von Spritzdüsen zwecks Einhaltung der Abstandsvorgaben zum Gewässerschutz durch Nutzung einer Applikationskarte 9 und mit softwareseitiger Unterstützung vor Beginn der Pflanzenschutzmittelapplikation automatisiert bestimmt werden kann. Anschließend kann die derart bestimmte "Grenzlinie" in eine Datei (z. B. in eine agroXML-Datei) eingefügt werden, die später vom Landwirt in die mobile Rechnereinheit 2 (Bordcomputer) des die Spritzeinrichtung bewegenden Fahrzeugs geladen wird, sodass die "Grenzlinie" bei der Pflanzenschutzmittelapplikation automatisch berücksichtigt wird.

Eine Schlagkartei, in der das zu behandelnde landwirtschaftliche Feld 1 (einschließlich der Vorgewende 13) angegeben ist, wurde bereits aufgezeichnet bzw. ist bereits vorhanden und kann vom Nutzer in die zentrale Rechnereinheit 2 geladen werden. Zudem werden die aktuellen Orts- bzw. Positionsdaten des Fahrzeugs im Feld 1 während der Pflanzenschutzmittelausbringung (beispielsweise mittels GPS-Überwachung) permanent erfasst und in das auf der zentralen Rechnereinheit 2 installierte Entscheidungstool 10 übertragen.

Die für das jeweilige Pflanzenschutzmittel und für das jeweilige oberirdische Gewässer 3a, 3b einzuhaltenden gesetzlichen Abstandsvorgaben (beispielsweise entnommen aus den NW-Auflagen) werden durch den Nutzer vorab in die zentrale Rechnereinheit 2 eingegeben oder über eine Datenverbindung in diese, beispielsweise aus einer Datenbank, einem Beratungstool oder einem Farmmanagementsystem, direkt oder schon vorbereitend geladen / übertragen. Auch die Art und die Parameter der in jedem Düsenstock eingesetzten Spritzdüsen werden vorab durch den Nutzer in die Rechnereinheit 2 eingegeben oder über eine Datenverbindung in diese, beispielsweise aus einer Datenbank, einem Beratungstool oder einem Farmmanagementsystem, direkt oder schon vorbereitend geladen / übertragen. Hierbei wird differenziert zwischen verlustmindernden Randdüsen (mit asymmetrischem Spritzbild), die am Feldrand 11 bei Erreichen und Unterschreiten des vorgegebenen Abstandes a zum Gewässer 3a, 3b verwendet werden, und Normaldüsen (mit symmetrischem Spritzbild), die im Feldinneren verwendet werden, wo der Abstand zum gefährdeten Gewässer 3a, 3b größer als der gesetzlich vorgegebene Abstand a ist.

Optional können in der Rechnereinheit 2 weitere Zusatztools, wie beispielsweise ein Tausensortool 12 (vgl. Fig. 1), installiert sein, die mit dem Entscheidungstool 10 verbunden sind und zusätzliche Entscheidungsinformationen (wie z. B. Taumenge) zur Verfügung stellen, auf deren Basis entschieden wird, ob, und falls ja, welche Düsenstöcke der Spritzeinrichtung an- bzw. ausgeschaltet werden sollen oder ob in einem Düsenstock andere Spritzparameter (z. B. Druck, Fahrgeschwindigkeit) und / oder eine andere Düsenart ausgewählt werden sollen.

Ausgehend vom vorgeschilderten anfänglichen Verfahrensablauf wird die Ermittlung der "Grenzlinie" nun wie folgt erreicht (vgl. Fig. 2 und 3):
Zunächst wird das an das zu behandelnde landwirtschaftliche Feld 1 angrenzende Oberflächengewässer 3a, 3b durch den Nutzer auf der Applikationskarte 9 mittels eines Markierungspolygons 4 markiert. Diese Approximation kann je nach Art und Größe des Gewässers 3a, 3b durch ein Flächenpolygon (im Fall eines stehenden oder nahezu stehenden Gewässers 3a, wie eines Sees oder eines Teiches, vgl. Fig. 2) oder durch ein Linienpolygon (im Fall eines fließenden Gewässers 3b, wie eines Flusses oder eines Bachs, vgl. Fig. 3) erfolgen.

Anschließend erfolgt die Erweiterung des Markierungspolygons 4 um den bereits vorab vom Nutzer in die zentrale Rechnereinheit 2 eingegebenen / geladenen Parameterwert (Abstand a) der gesetzlichen Abstandsvorgabe. In den Fig. 2 und 3 ist diese Verschiebung der das Gewässer 3a, 3b umrandenden Polygongrenze um die gesetzliche Abstandsvorgabe durch Doppelpfeile, die den gesetzlich vorgegebenen Mindestabstand a symbolisieren, verdeutlicht.

Als Ergebnis der Ausdehnung des Markierungspolygons 4 wird ein erweitertes Polygon 5 erzeugt, das teilweise in die Fläche des zu behandelnden landwirtschaftlichen Feldes 1 ragt. Es erfolgt die Berechnung der Schnittpunkte S1, S2 zwischen dem erweiterten Polygon 5 und den Außenkanten des zu bearbeitenden landwirtschaftlichen Feldes 1. Das sich zwischen diesen Schnittpunkten S1, S2 erstreckende und im landwirtschaftlichen Feld 1 liegende Liniensegment des erweiterten Polygons 5 stellt die Überschneidungslinie 6 zwischen dem erweiterten Polygon 5 und dem landwirtschaftlichen Feld 1 dar.

Die so ermittelte Überschneidungslinie 6 repräsentiert die "Grenzlinie", bei deren Erreichen und Überschreiten automatisch eine Abschaltung bestimmter Düsen und / oder eine Umschaltung auf eine für die Feldrandbespritzung geeignete Düsenart (sogenannte Randdüse) erfolgt. Um das Erreichen / Überschreiten der Überschneidungslinie 6 detektieren zu können und somit ein punktgenaues Ab- bzw. Umschalten zu gewährleisten, muss die Position des Fahrzeugs mit der angebrachten Spritzeinrichtung jederzeit bekannt sein (beispielsweise mit Hilfe von GPS). Verlässt das Fahrzeug wieder den Feldrandbereich 11 zwischen Überschneidungslinie 6 und Gewässer 3a, 3b, d. h. ist der Abstand zwischen Fahrzeug und Gewässer 3a, 3b wieder größer als der gesetzlich vorgegebene Abstand a, dann erfolgt ein Wiederanschalten der vormals abgeschalteten Düsen bzw. ein erneutes Umschalten auf die außerhalb des Feldrandbereiches 11 optimale Spritzdüse.

Wie eingangs im Hinblick auf Fig. 1 geschildert, enthält die zentrale Rechnereinheit 2 als Zusatztool 12 ein Tausensorprogramm, das die von einem Tausensor erfasste Taumenge fortlaufend mit düsenspezifischen Parametern abgleicht und in Abhängigkeit dieses Abgleichs gegebenenfalls auf eine für die jeweilige Taumenge ideale Düse umschaltet und / oder die Düsenparameter neu einstellt. Um jedoch eine Einhaltung der gesetzlichen Abstandsvorgaben zu Oberflächengewässern 3a, 3b in jedem Fall sicherzustellen, wird beim Einfahren des Fahrzeugs in den Feldrandbereich 11 zwischen der Überschneidungslinie 6 und dem Gewässer 3a, 3b die durch das Tausensorprogramm festgelegte Düsenwahl durch die von der gesetzlichen Abstandsvorgabe bestimmten Düsenwahl (Umschaltung auf Randdüse) oder Düsenabschaltung überschrieben.

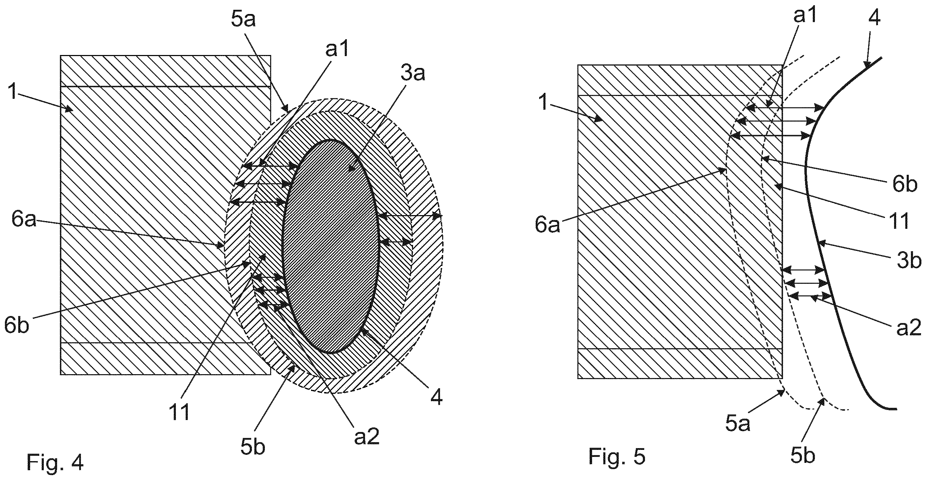

Die in Fig. 4 und 5 dargestellte Ausführungsform des erfindungsgemäßen Verfahrens unterscheidet sich von der in Fig. 2 und 3 dargestellten Ausführungsform lediglich dahingehend, dass das mit einem Markierungspolygon 4 markierte Gewässer (Fig. 4: durch Flächenpolygon markiertes stehendes Gewässer 3a; Fig. 5: durch Linienpolygon markiertes fließendes Gewässer 3b) nicht nur um eine, sondern um zwei Abstandsvorgaben (Abstände a1 und a2) erweitert wurde. Als Ergebnis werden demzufolge jeweils zwei erweiterte Polygone 5a, 5b um das Gewässer 3a, 3b herum gebildet.

Das um den jeweils größeren Abstand a1 zum Gewässer ausgedehnte Polygon 5a überschneidet sich mit der zu bearbeitenden landwirtschaftlichen Feldfläche 1 entlang einer ersten Überschneidungslinie 6a. Diese erste Überschneidungslinie 6a repräsentiert eine erste Führungslinie, bei deren Erreichen und Unterschreiten in einem oder mehreren Düsenstöcken der Spritzeinrichtung von einer zur Feldinnenbehandlung eingesetzten Normaldüse auf eine zur Feldrandbehandlung eingesetzte Randdüse umgeschaltet wird. Das um den jeweils geringeren Abstand a2 zum Gewässer 3a, 3b ausgedehnte Polygon 5b überschneidet sich mit der landwirtschaftlichen Feldfläche 1 entlang einer zweiten Überschneidungslinie 6b, die zwischen der ersten Überschneidungslinie 6a und dem Gewässer 3a, 3b angeordnet ist. Diese näher zum Gewässer befindliche zweite Überschneidungslinie 6b bildet eine zweite Führungslinie, bei deren Erreichen und Unterschreiten die relevanten, in den an das Gewässer 3a, 3b angrenzenden Feldrandbereich 11 eindringenden Düsenstöcke ganz abgeschaltet werden.

In dem in Fig. 4 und 5 dargestellten Ausführungsbeispiel sind somit vorteilhafterweise gleichzeitig zwei erweiterte Polygone 5a, 5b zur Bildung zweier "Grenzlinien" (Überschneidungslinien 6a, 6b) vorhanden, wobei die erste, sich weiter vom Gewässer entfernt befindende "Grenzlinie" (Überschneidungslinie 6a) zur Umschaltung einer oder mehrerer Düsenstöcke auf jeweils eine spezielle Randdüse dient, während die zweite, sich näher am Gewässer befindende "Grenzlinie" (Überschneidungslinie 6b) zur vollständigen Abschaltung einer oder mehrerer Düsenstöcke dient. Durch die vorbereitende Umschaltung auf Randdüsen kann zuverlässig verhindert werden, dass Pflanzenschutzmittel über die gesetzlich vorgegebene Abstandsgrenze zum Gewässer (gebildet durch die zweite, gewässernähere Überschneidungslinie 6b) abdriftet, wodurch eine Belastung des Gewässers 3a, 3b sicher ausgeschlossen werden kann.

Im Ergebnis wird durch das erfindungsgemäße Verfahren eine präzise und automatisch von der Rechnereinheit 2 gesteuerte Einhaltung der gesetzlichen Abstandsvorgaben im Gewässerschutz ermöglicht, sodass kein manuelles Ab- bzw. Umschalten durch den Landwirt mehr erforderlich ist und das Feld 1 ohne manuelles Umstellen von Düsen in hocheffizienter Weise bearbeitet werden kann.

## Patentansprüche

1. Verfahren zum Ausbringen von Pflanzenschutzmittel auf ein landwirtschaftliches Feld (1) mit einer einem Fahrzeug zugeordneten Spritzeinrichtung, wobei während dem Ausbringen von Pflanzenschutzmittel Orts- bzw. Positionsdaten des Fahrzeugs insbesondere mittels eines Satellitennavigationssystems erfasst und an eine vorzugsweise als Bordcomputer ausgebildete Rechnereinheit (2) übermittelt werden, wobei Orts- bzw. Positionsdaten zumindest eines Gewässers (3a, 3b) in der Rechnereinheit (2) hinterlegt sind und dass bei Erreichen und Unterschreiten eines vorgegebenen Abstandes (a, a1, a2) zum Gewässer die Betriebsweise der Spritzeinrichtung von der Rechnereinheit (2) derart gesteuert bzw. geregelt wird, dass eine Anpassung und / oder Reduzierung und / oder Beendigung des Ausbringens von Pflanzenschutzmittel durchgeführt wird, -wobei in der Rechnereinheit (2) eine Applikationskarte (9) vorgegeben ist, in welcher das zu behandelnde landwirtschaftliche Feld (1) und die ausgebrachten und auszubringenden Pflanzenschutzmittelmengen abgespeichert sind,
**dadurch gekennzeichnet, dass**
- der vorgegebene Abstand (a, a1, a2) zum jeweiligen Gewässer (3a, 3b) in die Rechnereinheit (2) eingegeben, geladen oder eingelesen wird,
- auf der Applikationskarte (9) das Gewässer (3a, 3b) mittels eines Markierungspolygons (4) approximiert wird,
- das Markierungspolygon (4) um den vorgegebenen Abstand (a, a1, a2) zum Gewässer (3a, 3b) erweitert wird zur Bildung eines erweiterten Polygons (5, 5a, 5b),
- eine Überschneidungslinie (6, 6a, 6b) ermittelt wird, wo sich das erweiterte Polygon (5, 5a, 5b) mit dem zu behandelnden landwirtschaftlichen Feld (2) überschneidet und dass,
- sobald das Fahrzeug die Überschneidungslinie (6, 6a, 6b) erreicht und überquert, die Rechnereinheit (2) die Spritzeinrichtung automatisch derart steuert bzw. regelt, dass eine Anpassung und / oder Reduzierung und / oder Beendigung des Ausbringens des Pflanzenschutzmittels erreicht wird, um das Gewässer (3a, 3b) nicht mit Pflanzenschutzmittel zu belasten.

2. Verfahren nach Anspruch 1, **dadurch gekennzeichnet, dass** die Spritzeinrichtung in Form zumindest einer Spritzbalkenanordnung mit zumindest einer quer zur Fahrtrichtung verlaufenden Flüssigkeitsleitung ausgebildet ist, wobei die Spritzbalkenanordnung in Abständen mit Düsenstöcken aus jeweils mehreren verschiedenartigen Spritzdüsen versehen ist, denen über die Flüssigkeitsleitung ein flüssiges Pflanzenschutzmittel unter Druck zugeführt wird, und wobei ein oder mehrere Düsenstöcke jeweils einer Teilbreite zugeordnet sind.

3. Verfahren nach Anspruch 2, **dadurch gekennzeichnet, dass** die Art und / oder die Parameter der jeweils in den Düsenstöcken vorhandenen Spritzdüsen in der Rechnereinheit (2) hinterlegt sind und dass bei Erreichen und Unterschreiten des vorgegebenen Abstandes (a, a1, a2) zum Gewässer (3a, 3b) in zumindest einem Düsenstock auf eine Spritzdüse umgeschaltet wird, die ein in Spritzmenge und / oder im Spritzbild angepasstes Ausbringen des Pflanzenschutzmittels gewährleistet, um das Gewässer (3a, 3b) nicht mit Pflanzenschutzmittel zu belasten.

4. Verfahren nach Anspruch 2 oder 3, **dadurch gekennzeichnet, dass** bei Erreichen und Unterschreiten des vorgegebenen Abstandes (a, a1) zum Gewässer in zumindest einem Düsenstock auf eine Randdüse umgeschaltet wird.

5. Verfahren nach zumindest einem der vorstehenden Ansprüche 2 bis 4, **dadurch gekennzeichnet, dass** bei Erreichen und Unterschreiten des vorgegebenen Abstandes (a, a2) zum Gewässer (3a, 3b) ein oder mehrere Düsenstöcke abgeschaltet werden, um einzelne Teilbreiten zu schließen oder das Ausbringen von Pflanzenschutzmittel ganz einzustellen.

6. Verfahren nach zumindest einem der vorstehenden Ansprüche 1 bis 5, **dadurch gekennzeichnet, dass** es sich bei dem Gewässer (3a) um ein stehendes oder nahezu stehendes Gewässer, wie einen See oder einen Teich, handelt, der durch ein Flächenpolygon als Markierungspolygon (4) approximiert wird, oder dass es sich bei dem Gewässer (3b) um ein fließendes Gewässer, wie einen Fluss oder einen Bach, handelt, der durch ein Linienpolygon als Markierungspolygon (4) approximiert wird.

7. Verfahren nach zumindest einem der vorstehenden Ansprüche 1 bis 6, **dadurch gekennzeichnet, dass** Profildaten des zu behandelnden Feldes (1), wie die Hangneigung, und / oder meteorologische Daten, wie die Windrichtung und / oder die Windstärke, in der Rechnereinheit (2) hinterlegt sind, um ein daran angepasstes Ausbringen von Pflanzenschutzmittel zu erreichen.

8. Verfahren nach zumindest einem der vorstehenden Ansprüche 1 bis 7, **dadurch gekennzeichnet, dass** der Spritzeinrichtung zumindest eine Sensoreinrichtung zur Ermittlung des Taubedeckungsgrades der mit dem Pflanzenschutzmittel zu behandelnden Pflanzen zugeordnet ist, und dass die Rechnereinheit (2) die Spritzmenge und / oder das Spritzbild des Pflanzenschutzmittels in Abhängigkeit des Taubedeckungsgrades einstellt und / oder verändert.

## Claims

1. Method for dispensing plant protection product onto an agricultural field (1) by way of a spraying device associated with a vehicle, wherein, during the dispensing of plant protection product, location or position data of the vehicle are sensed in particular by means of a satellite navigation system and transmitted to a computer unit (2) preferably in the form of an on-board computer, wherein the location or position data of at least one body of water (3a, 3b) are stored in the computer unit (2) and when a predefined distance (a, a1, a2) from the body of water is reached or fallen below, the manner of operation of the spraying device is controlled or regulated by the computer unit (2) such that the dispensing of plant protection product is adapted and/or reduced and/or ended, wherein, in the computer unit (2), an application map (9) is predefined, in which the agricultural field (1) to be treated and the amounts of plant protection product dispensed or to be dispensed are stored,
**characterized in that**
- the predefined distance (a, a1, a2) from the particular body of water (3a, 3b) is input, loaded or read into the computer unit (2),
- the body of water (3a, 3b) is approximated on the application map (9) by means of a marker polygon (4),
- the marker polygon (4) is expanded by the predefined distance (a, a1, a2) from the body of water (3a, 3b) in order to form an expanded polygon (5, 5a, 5b),
- an overlap line (6, 6a, 6b) is determined where the expanded polygon (5, 5a, 5b) overlaps the agricultural field (2) to be treated, and **in that**
- as soon as the vehicle reaches and crosses the overlap line (6, 6a, 6b), the computer unit (2) automatically controls or regulates the spraying device such that the dispensing of the plant protection product is adapted and/or reduced and/or ended, in order not to pollute the body of water (3a, 3b) with the plant protection product.

2. Method according to Claim 1, **characterized in that** the spraying device is configured in the form of at least one spray boom arrangement with at least one liquid line extending transversely to the direction of travel, wherein the spray boom arrangement is provided at spacings with nozzle holders each made up of a plurality of spray nozzles of different types, to which a liquid plant protection product is fed under pressure via the liquid line, and wherein one or more nozzle holders are each assigned to a partial width.

3. Method according to Claim 2, **characterized in that** the type and/or the parameters of the spray nozzles present in each of the nozzle holders are stored in the computer unit (2), and **in that** when the predefined distance (a, a1, a2) from the body of water (3a, 3b) is reached or fallen below, a switch takes place in at least one nozzle holder to a spray nozzle that ensures that the plant protection product is dispensed in a manner adapted in terms of amount sprayed and/or of spray pattern, in order not to pollute the body of water (3a, 3b) with plant protection product.

4. Method according to Claim 2 or 3, **characterized in that** when the predefined distance (a, a1) from the body of water is reached or fallen below, a switch takes place in at least one nozzle holder to a peripheral nozzle.

5. Method according to at least one of the preceding Claims 2 to 4, **characterized in that** when the predefined distance (a, a2) from the body of water (3a, 3b) is reached or fallen below, one or more nozzle holders are switched off in order to close individual partial widths or to completely stop the dispensing of plant protection product.

6. Method according to at least one of the preceding Claims 1 to 5, **characterized in that** the body of water (3a) is a standing or virtually standing body of water, such as a lake or a pond, which is approximated by an area polygon as marker polygon (4), or **in that** the body of water (3b) is a flowing body of water, such as a river or stream, which is approximated by a line polygon as marker polygon (4).

7. Method according to at least one of the preceding Claims 1 to 6, **characterized in that** profile data of the field (1) to be treated, such as the gradient, and/or meteorological data, such as the wind direction and/or wind strength, are stored in the computer unit (2), in order for plant protection product to be dispensed in an adapted manner.

8. Method according to at least one of the preceding Claims 1 to 7, **characterized in that** the spraying device is assigned at least one sensor device for determining the degree of dew coverage of the plants to be treated with the plant protection product, and **in that** the computer unit (2) sets and/or alters the amount sprayed and/or the spray pattern of the plant protection product depending on the degree of dew coverage.

## Revendications

1. Procédé d'épandage d'agents phytosanitaires sur un champ agricole (1) au moyen d'un dispositif de pulvérisation associé à un véhicule, des données de localisation ou de position du véhicule étant enregistrées lors de l'épandage d'agents phytosanitaires, notamment au moyen d'un système de navigation par satellite, et transmises à une unité informatique (2), de préférence conçue comme un ordinateur de bord, les données de localisation ou de position d'au moins un plan d'eau (3a, 3b) étant mémorisées dans l'unité informatique (2) et lorsqu'une distance spécifiée (a, a1, a2) par rapport au plan d'eau est atteinte et franchie le mode de fonctionnement du dispositif de pulvérisation étant commandé ou régulé par l'unité informatique (2) de manière à procéder à un ajustement et/ou à une réduction et/ou à l'arrêt de l'épandage d'agents phytosanitaires, une carte d'application (9) étant spécifiée dans l'unité informatique (2), carte dans laquelle sont mémorisés le champ agricole (1) à traiter et les quantités d'agents phytosanitaires épandues et à épandre, **caractérisé en ce que**
- la distance spécifiée (a, a1, a2) par rapport au plan d'eau respectif (3a, 3b) est entrée, chargée ou lue dans l'unité informatique (2),
- le plan d'eau (3a, 3b) est représenté approximativement sur la carte d'application (9) au moyen d'un polygone de marquage (4),
- le polygone de marquage (4) est prolongé de la distance spécifiée (a, a1, a2) par rapport au plan d'eau (3a, 3b) pour former un polygone étendu (5, 5a, 5b),
- une ligne d'intersection (6, 6a, 6b) est déterminée à l'endroit où le polygone étendu (5, 5a, 5b) coupe le champ agricole (2) à traiter et **en ce que**,
- dès que le véhicule atteint et franchit la ligne d'intersection (6, 6a, 6b), le calculateur (2) commande ou régule automatiquement le dispositif de pulvérisation de manière à procéder à une adaptation et/ou une réduction et/ou un arrêt de l'épandage de l'agent phytosanitaire afin de ne pas polluer le plan d'eau (3a, 3b) avec l'agent phytosanitaire.

2. Procédé selon la revendication 1, **caractérisé en ce que** le dispositif de pulvérisation est conçu sous la forme d'au moins un ensemble de barres de pulvérisation pourvu d'au moins une conduite de liquide s'étendant transversalement à la direction de roulement, l'ensemble de barres de pulvérisation étant pourvu à intervalles d'ensembles de buses comprenant chacune une pluralité de buses de pulvérisation différentes auxquelles un agent phytosanitaire liquide est amené sous pression par le biais de la conduite de liquide, et un ou plusieurs ensembles de buses étant chacun associés à une section.

3. Procédé selon la revendication 2, **caractérisé en ce que** le type et/ou les paramètres des buses de pulvérisation présentes dans chacun des ensembles de buses sont mémorisés dans l'unité informatique (2) et **en ce que**, lorsque la distance spécifiée (a, a1, a2) par rapport au plan d'eau (3a, 3b) est atteinte et franchie, une commutation sur une buse de pulvérisation d'au moins un ensemble de buses est effectuée, laquelle assure un épandage de l'agent phytosanitaire qui est adapté en termes de quantité de pulvérisation et/ou de modèle de pulvérisation afin de ne pas polluer le plan d'eau (3a, 3b) avec des agents phytosanitaires.

4. Procédé selon la revendication 2 ou 3, **caractérisé en ce que**, lorsque la distance spécifiée (a, a1) par rapport au plan d'eau est atteinte et franchie, une commutation sur une buse de bord de l'au moins un ensemble de buses est effectuée.

5. Procédé selon l'une au moins des revendications 2 à 4 précédentes, **caractérisé en ce que**, lorsque la distance spécifiée (a, a2) par rapport au plan d'eau (3a, 3b) est atteinte et franchie, un arrêt d'un ou plusieurs ensembles de buse est effectué afin de fermer des sections individuelles ou d'arrêter complètement l'épandage d'agent phytosanitaire.

6. Procédé selon l'une au moins des revendications 1 à 5 précédentes, **caractérisé en ce que** le plan d'eau (3a) est un plan d'eau stagnante ou quasi stagnante, telle qu'un lac ou un étang, qui est représenté approximativement par un polygone de surface servant de polygone de marquage (4), ou **en ce que** le plan d'eau (3b) est un plan d'eau en écoulement, telle qu'une rivière ou un ruisseau, qui est représenté approximativement par un polygone de lignes servant de polygone de marquage (4).

7. Procédé selon l'une au moins des revendications 1 à 6 précédentes, **caractérisé en ce que** des données de profil du champ (1) à traiter, telles que la pente, et/ou des données météorologiques, telles que la direction du vent et/ou la force du vent, sont mémorisées dans l'unité informatique (2) afin de réaliser un épandage adapté d'agent phytosanitaire.

8. Procédé selon l'une au moins des revendications précédentes 1 à 7, **caractérisé en ce que** le dispositif de pulvérisation est associé à au moins un dispositif de détection destiné à déterminer le degré de couverture de rosée des plantes à traiter avec l'agent phytosanitaire, et **en ce que** l'unité informatique (2) règle et/ou modifie la quantité de pulvérisation et/ou le modèle de pulvérisation de l'agent phytosanitaire en fonction du degré de couverture de rosée.
